(19) Europäisches Patentamt
European Patent Office
Office européen des brevets

(11) **EP 3 094 548 B1**

(12) **EUROPÄISCHE PATENTSCHRIFT**

(45) Veröffentlichungstag und Bekanntmachung des Hinweises auf die Patenterteilung:
**11.07.2018 Patentblatt 2018/28**

(21) Anmeldenummer: **15723682.9**

(22) Anmeldetag: **12.05.2015**

(51) Int Cl.:
***B62M 25/08*** *(2006.01)* ***B60L 15/20*** *(2006.01)*
***B62M 6/45*** *(2010.01)*

(86) Internationale Anmeldenummer:
**PCT/EP2015/060417**

(87) Internationale Veröffentlichungsnummer:
**WO 2015/173212 (19.11.2015 Gazette 2015/46)**

(54) **VERFAHREN UND VORRICHTUNG ZUM BETREIBEN EINES ELEKTROFAHRRADS**

METHOD AND DEVICE FOR OPERATING AN ELECTRIC BICYCLE

PROCÉDÉ ET DISPOSITIF POUR FAIRE FONCTIONNER UN VÉLO À ASSISTANCE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.05.2014 DE 102014209350**

(43) Veröffentlichungstag der Anmeldung:
**23.11.2016 Patentblatt 2016/47**

(73) Patentinhaber: **Conti Temic Microelectronic GmbH**
**90411 Nürnberg (DE)**

(72) Erfinder: **REPOULIAS, Filoktimon**
**90409 Nürnberg (DE)**

(74) Vertreter: **Bonn, Roman Klemens**
**Continental Automotive GmbH**
**Patente und Lizenzen**
**Postfach 22 16 39**
**80506 München (DE)**

(56) Entgegenhaltungen:
**JP-A- H0 733 070     JP-A- H10 250 674**
**TW-A- 201 240 875    US-A1- 2011 267 178**

EP 3 094 548 B1

**Beschreibung**

Die vorliegende Erfindung betrifft ein Verfahren und eine Vorrichtung zum Betreiben eines Elektrofahrrads, welches einen Elektromotor und ein Getriebe mit mindestens zwei Gängen aufweist.

Elektrofahrräder mit Tretunterstützung sind in der Regel zwei-, drei- oder vierrädrige Fahrzeuge, die mit Pedalkurbeln und einem Elektromotor als elektrische Antriebseinheit ausgerüstet sind. Diese Elektrofahrräder, auch pedelecs genannt, können nicht ausschließlich durch die elektrische Antriebseinheit angetrieben werden, sondern benötigen auch stets eine gewisse Antriebsleistung, die ein Fahrradfahrer mittels der Pedalkurbeln aufbringen muss. Die elektrische Antriebseinheit ist demzufolge ein Unterstützungsmotor und treibt das Elektrofahrrad nur an, wenn auch der Fahrradfahrer seinen Teil dazu beiträgt.

Typischerweise basieren Schaltentscheidungen eines automatischen Schaltmechanismus für Fahrräder oder für Systeme, welche eine Geschwindigkeit des Fahrzeugs auslesen und ein entsprechendes Hochschalten oder Herunterschalten auf einem Display anzeigen - wobei das Hoch- oder Runterschalten manuell bewerkstelligt würde - nahezu ausschließlich auf der Fahrzeuggeschwindigkeit und der Trittfrequenz des Fahrradfahrers, um letztere im Bereich eines "Komfort"-Wertes für den Fahrradfahrer zu halten. Aus Sicht des Fahrradfahrers stellen sich jedoch signifikant höhere Anforderungen an Elektrofahrräder. Da ein Elektrofahrrad im Regelfall mit einem elektronischen Subsystem ausgestattet ist, welches unter anderem einen Motor, Leistungselektronik und eine oder mehrere Batterien aufweist, erwartet der Fahrradfahrer nicht nur einen Fahrkomfort bezüglich einer bevorzugten Trittfrequenz, sondern zum Beispiel auch eine hohe Lebensdauer des elektrischen Systems hinsichtlich einer möglichen Maximierung der Reichweite bei der verfügbaren Batterieleistung.

Bislang sind automatische Schaltmechanismen derart ausgelegt, dass diese eine Gangwahlentscheidung sowie ein Schalten unabhängig und ohne Berücksichtigung einer möglichen Installation und eines elektronischen Assistenzsystems des Fahrrads vornehmen. Bezüglich einer manuellen Schaltung unterscheidet sich die Problematik kaum, da ein Fahrradfahrer im Regelfall seine Schaltentscheidung unabhängig von dem elektrischen Energieverbrauch trifft. Den Stand der Technik nach dem Oberbegriff des Anspruchs 1 stellt hier die JP H10 250674 dar. Eine Aufgabe, welche der Erfindung zugrunde liegt, ist es, ein Verfahren und eine Vorrichtung zu offenbaren, welches beziehungsweise welche dazu geeignet ist, ein Elektrofahrrad mit einem hohen Fahrkomfort sowie einem geringen elektrischen Energieverbrauch zu betreiben.

Gemäß einem ersten Aspekt der Erfindung umfasst ein Verfahren zum Betreiben eines Elektrofahrrads, welches einen Elektromotor und ein Getriebe mit mindestens zwei Gängen aufweist:

- Ermitteln einer momentanen Trittfrequenz, welche von einem Benutzer des Elektrofahrrads erzeugt wird;
- Prüfen, ob die ermittelte momentane Trittfrequenz innerhalb eines vorbestimmten Trittfrequenzintervalls liegt;
- Ermitteln einer momentanen Fahrgeschwindigkeit des Elektrofahrrads;
- Ermitteln wenigstens zweier Gänge des Getriebes innerhalb des vorbestimmten Trittfrequenzintervalls in Abhängigkeit der ermittelten Fahrgeschwindigkeit;
- Ermitteln jeweils einer Leistung des Elektromotors für jeden der ermittelten wenigstens zwei Gänge;
- Ermitteln der geringsten ermittelten Leistung des Elektromotors durch Vergleichen der wenigstens beiden ermittelten Leistungen des Elektromotors; und
- Ermitteln desjenigen Gangs des Getriebes, für den die geringere Leistung ermittelt wurde.

An dieser Stelle sei darauf hingewiesen, dass unter einem Gang des Getriebes ein diskretes Übersetzungsverhältnis verstanden wird.

Das beschriebene Verfahren berücksichtigt und erfüllt zwei Anforderungen: Einen Fahrkomfort für den Fahrradfahrer bereitzustellen und einen optimalen elektrischen Energieverbrauch zu gewährleisten, insbesondere aufgrund eines geringen Energieverbrauchs während eines normalen, im Wesentlichen konstanten Fahrmodus (englisch: cruising mode). Dabei wird zunächst eine momentane Trittfrequenz eines Benutzers des Elektrofahrrads ermittelt. Anschließend wird geprüft, ob die ermittelte momentane Trittfrequenz innerhalb eines vorbestimmten Trittfrequenzintervalls liegt. Das vorbestimmte Trittfrequenzintervall kann dabei voreingestellt sein oder je nach Bedarf von einem Benutzer vorgegeben und somit an dessen Bedarf angepasst sein. In Abhängigkeit der momentanen Trittfrequenz wird eine Fahrgeschwindigkeit des Elektrofahrrads ermittelt. Anschließend werden wenigstens zwei Gänge des Getriebes innerhalb des vorbestimmten Trittfrequenzintervalls in Abhängigkeit der ermittelten Fahrgeschwindigkeit ermittelt. Anschließend wird für die wenigstens zwei Gänge jeweils ein Leistungsverbrauch des Elektromotors ermittelt, wobei schließlich derjenige Gang ermittelt wird, für den eine geringere Leistung ermittelt wurde. Somit wird mittels des Verfahrens derjenige Gang beziehungsweise dasjenige Übersetzungsverhältnis ermittelt, welches in Abhängigkeit einer momentanen Trittfrequenz beziehungsweise momentanen Fahrgeschwindigkeit den geringsten Leistungsverbrauch für den Elektromotor darstellt. Zudem zeichnet sich das Verfahren dadurch aus, dass geringe Anforderungen an die Ermittlung bzw. Berechnung gestellt werden, insbesondere die Berechnung während des Fahrens mit dem Elektrofahrrad, da die Berechnungen bzw. Ermittlungen meist auf Grundlage schneller Interpolationen eindimensionaler oder zweidimensionaler Matrizen, einfachen Intervallauswahlen und einfachen algebraischen Berechnungen beruhen.

Gemäß einer Ausgestaltung des ersten Aspekts umfasst das Verfahren weiter ein Ermitteln jeweils eines Motordrehmoments des Elektromotors für jeden der ermittelten wenigstens zwei Gänge. Weiter umfasst das Verfahren ein Ermitteln jeweils einer Motorwinkelgeschwindigkeit des Elektromotors für jeden der ermittelten wenigstens zwei Gänge und ein Ermitteln der Leistungen des Elektromotors in Abhängigkeit der entsprechenden ermittelten Motordrehmomente und in Abhängigkeit der entsprechenden ermittelten Motorwinkelgeschwindigkeiten. Somit werden die Leistungen des Elektromotors für die wenigstens zwei Gänge zusätzlich in Abhängigkeit eines Motordrehmoments eines jeden Gangs beziehungsweise in Abhängigkeit einer jeweiligen Motorwinkelgeschwindigkeit eines jeweiligen Gangs ermittelt. Somit kann auf einfache Art und Weise und besonders genau die Leistung des Elektromotors für den entsprechenden ermittelten Gang ermittelt werden.

Gemäß einer weiteren Ausgestaltung des ersten Aspekts umfasst das Verfahren ein Ermitteln jeweils eines Wirkungsgrads des Elektromotors für jeden der ermittelten zwei Gänge in Abhängigkeit des entsprechenden ermittelten Motordrehmoments und in Abhängigkeit der entsprechenden ermittelten Motorwinkelgeschwindigkeit. Weiter umfasst das Verfahren ein Ermitteln der Leistungen des Elektromotors in Abhängigkeit der Wirkungsgrade, in Abhängigkeit der entsprechenden ermittelten Motordrehmomente und in Abhängigkeit der entsprechenden ermittelten Motorwinkelgeschwindigkeiten. Somit werden die Leistungen des Elektromotors zusätzlich in Abhängigkeit von Wirkungsgraden des Motors für die jeweiligen ermittelten Gänge ermittelt.

Bevorzugt werden die Wirkungsgrade anhand eines Verbrauchkennfelds des Elektromotors ermittelt. In einem derartigen Verbrauchkennfeld werden Wirkungsgrade in Abhängigkeit eines Motordrehmoments und einer Motorwinkelgeschwindigkeit, also einer Motordrehzahl, dargestellt. Dabei ergeben sich so genannte Iso- Wirkungsgradkonturen. Für jede Kombination eines Motordrehmoments und der entsprechenden Motorwinkelgeschwindigkeit lässt sich somit ein Wirkungsgrad des Elektromotors ermitteln, ausgehend von welchem sich auf einen Energieverbrauch des Elektromotors rückschließen lässt.

Gemäß einer weiteren Ausgestaltung des ersten Aspekts werden nach Ermitteln der Motordrehmomente und Motorwinkelgeschwindigkeiten eine Klassifizierung der ermittelten Motordrehmomente und der ermitteltem Motorwinkelgeschwindigkeiten durchgeführt. Bei der Klassifizierung werden die ermittelten Motodrehmomente und/oder die ermittelten Motorwinkelgeschwindigkeiten entsprechend vorgegebener Grenzdrehmomente beziehungsweise Grenzwinkelgeschwindigkeiten des Elektromotors klassifiziert. Dabei kann beispielsweise festgestellt werden, ob zulässige Grenzdrehmomente bzw. Grenzwinkelgeschwindigkeiten des Elektromotors überschritten werden und somit ein sicherer Betrieb des Elektromotors sichergestellt ist.

Gemäß einer weiteren Ausgestaltung des ersten Aspekts umfasst das Verfahren ein Ausgeben eines Signals, wobei das Signal Informationen über den ermittelten Gang enthält, für den die geringere Leistung ermittelt wurde. Dabei kann das Ausgeben des Signals ein Ausgeben eines Autosignals, ein Ausgeben eines Videosignals und/oder das Ausgeben eines Steuersignals für eine Anzeigevorrichtung umfassen. Beispielsweise kann somit einem Benutzer des Elektrofahrrads akustisch oder visuell der ermittelte Gang signalisiert werden, wobei es dem Benutzer überlassen bleibt, den Schaltvorgang des Getriebes vorzunehmen.

Gemäß einer weiteren Ausgestaltung des ersten Aspekts umfasst das Verfahren weiterhin, dass in Abhängigkeit des ermittelten Gangs, welcher der geringsten ermittelten Leistung zugeordnet ist, ein Aktuator zum automatischen Schalten des Getriebes angesteuert wird. Somit ist es in Abhängigkeit des ermittelten Ganges möglich, automatisch das Getriebe des Elektromotors zu schalten.

Gemäß einer weiteren Ausgestaltung des ersten Aspekts wird der Aktuator zum automatischen Schalten des Getriebes erst nach einer vorgegebenen Zeitspanne nach Ermittlung desjenigen Gangs des Getriebes angesteuert, für den die geringere Leistung ermittelt wurde. Analog dazu kann auch das Ausgeben des Signals erst nach der vorgegebenen Zeitspanne erfolgen. Die vorgegebene Zeitspanne dient als Totzeit, so dass etwaige Schwankungen in der Trittfrequenz des Fahrers und somit der Fahrgeschwindigkeit nicht zu einem möglicherweise häufigem Hin- und Herschalten im Falle eines Automatikgetriebes beziehungsweise zu einem häufigen Ermitteln von unterschiedlichen Gängen führt. Dabei kann die Zeitspanne beispielsweise so gewählt sein, dass sichergestellt ist, dass der Benutzer die Geschwindigkeit des Elektrofahrrads über eine gewisse Zeitspanne nicht oder nur geringfügig verändert.

Gemäß einem zweiten Aspekt der Erfindung wird eine Vorrichtung zum Betreiben eines Elektrofahrrads beschrieben, die dazu ausgebildet ist, ein Verfahren nach dem ersten Aspekt durchzuführen.

Die Vorrichtung ermöglicht im Wesentlichen die vorgenannten Vorteile und Funktionen.

Weitere Ausgestaltungen der Erfindung sind in der nachfolgenden, ausführlichen Beschreibung eines Ausführungsbeispiels unter Zuhilfenahme der angehängten Figuren beschrieben.

In den Figuren zeigen:

Figur 1        ein Ablaufdiagramm eines Verfahrens zum Betreiben eines Elektrofahrrads,

Figur 2      eine schematische Darstellung eines Verbrauchskennfelds und einer in einem Mikrocontroller gespeicherten Gittermatrix,

Figur 3      eine erste schematische Diagrammdarstellung einer Geschwindigkeit des Elektrofahrrads bezüglich einer Trittfrequenz,

Figur 4      eine schematische, perspektivische Darstellung eines Eingabegeräts,

Figur 5      eine schematische Darstellung einer Ermittlung eines Geschwindigkeitsintervalls,

Figur 6      eine zweite schematische Diagrammdarstellung einer Fahrzeuggeschwindigkeit des Elektrofahrrads bezüglich einer Trittfrequenz,

Figur 7      eine erste schematische Detaildarstellung eines Schritts des Ablaufdiagramms,

Figur 8      eine dritte schematische Diagrammdarstellung einer Fahrzeuggeschwindigkeit des Elektrofahrrads bezüglich einer Trittfrequenz,

Figur 9      eine zweite schematische Detaildarstellung eines Schritts des Ablaufdiagramms,

Figur 10     eine dritte schematische Detaildarstellung eines Schritts des Ablaufdiagramms,

Figur 11     eine schematische Darstellung der Ermittlung von Wirkungsgraden eines Elektromotors des Elektrofahrrads,

Figur 12     eine vierte schematische Detaildarstellung eines Schritts des Ablaufdiagramms, und

Figur 13     eine fünfte schematische Detaildarstellung eines Schritts des Ablaufdiagramms.

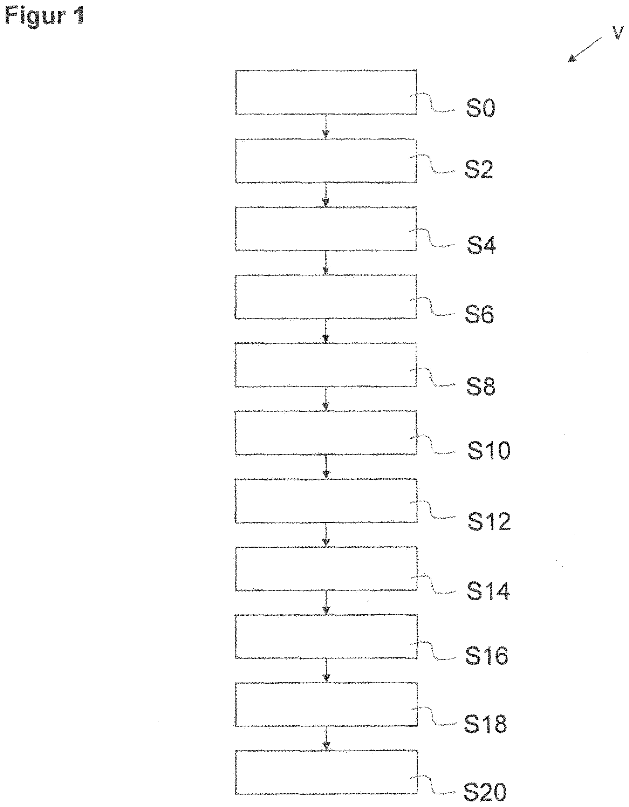

In Figur 1 ist ein Ablaufdiagramm für ein Verfahren V zum Betreiben eines Elektrofahrrads dargestellt. Das Verfahren V wird beispielsweise in einer Vorrichtung zum Betreiben des Elektrofahrrads ausgeführt, welche wenigstens eine elektrische Antriebseinheit mit einer Steuereinheit und einem Elektromotor umfasst. Das Elektrofahrrad umfasst weiter ein Getriebe, welches bevorzugt am Hinterrad vorgesehen ist. Die Steuereinheit weist beispielsweise einen Daten- und Programmspeicher sowie eine Recheneinheit auf und ist signaltechnisch mit einer elektrischen Antriebseinheit des Elektrofahrrads, insbesondere mit dem Elektromotor, gekoppelt. Weiter ist die Steuereinheit beispielsweise mit einem oder mehreren Sensoren des Elektrofahrrads gekoppelt, um beispielsweise Winkelgeschwindigkeiten des Fahrrads, Kräfte, Momente und/oder weitere Messwerte signaltechnisch zu erfassen. Die Steuereinheit umfasst ferner einen Mikrocontroller mit Permanentspeicher und Arbeitsspeicher (RAM) .

Bevor das Verfahren V anhand des in Figur 1 gezeigten Ablaufdiagramms detailliert erläutert wird, werden für das Verfahren V notwendige Berechnungen erläutert. Diese können auch als Offline-Berechnungskomponenten des Verfahrens V bezeichnet werden und können werksseitig vorgegeben sein. Alternativ können diese von einem Benutzer manipuliert werden. Diese Berechnungen können beispielsweise vor einem Start des Elektrofahrrads durchgeführt werden.

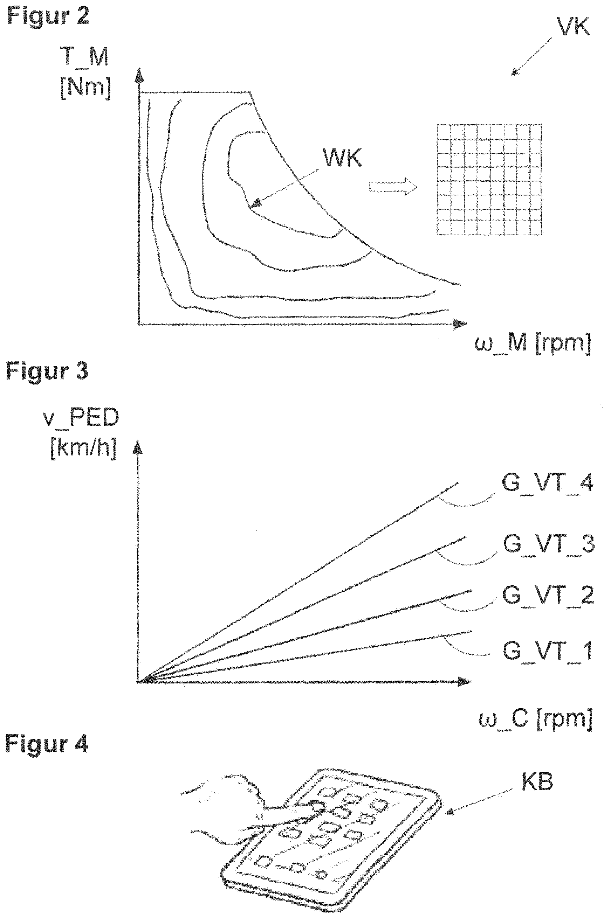

In Figur 2 ist eine Diagrammdarstellung eines Verbrauchskennfelds VK des Elektromotors des Elektrofahrrads dargestellt. In dem Diagramm ist ein Motordrehmoment T_M gegenüber einer Motorwinkelgeschwindigkeit $\omega$_M dargestellt. Weiter sind in dem Diagramm Iso-Wirkungsgradkonturen WK von Wirkungsgraden des Elektromotors dargestellt. Die entsprechenden Diagrammwerte sind, wie rechts neben dem dargestellten Pfeil zu sehen, in einer Gittermatrix diskretisiert und in dem Permanentspeicher des Mikrocontrollers der Steuereinheit abgelegt. Dabei kann das Verbrauchskennfeld VK während des Ablaufs des Verfahrens V in den Arbeitsspeicher des Mikrocontrollers geladen werden. Anhand des Verbrauchskennfelds VK können, wie später erläutert, anhand eines Drehmoments und einer zugehörigen Winkelgeschwindigkeit des Elektromotors Wirkungsgrade ermittelt werden, die eine Aussage über einen Energieverbrauch des Elektromotors geben.

Eine weitere Offline-Berechnungskomponente ist die Ableitung einer kinematischen Beziehung zwischen einer momentanen Trittfrequenz $\omega$_C eines Fahrradfahrers und einer momentanen Geschwindigkeit v_PED_o des Elektrofahrrads. Diese kinematische Beziehung ist in der unten stehenden Gleichung G1 in Abhängigkeit eines Ganges G_VT_i des Getriebes des Elektromotors angegeben. Dabei steht das Suffix "i" für einen entsprechenden Gang des Getriebes. An dieser Stelle sei darauf hingewiesen, dass die im Fließtext verwendeten Variablenbezeichnungen Unterstriche aufweisen, während in den Formeln für die Variablen eine tief- bzw. hochgestellte Schreibweise, teilweise mit Kommata, verwendet wird. Solange dieselben Zeichen verwendet werden handelt es sich um die gleichen Variablen.

$$(\text{G1}): \qquad v_{PED,o} = \frac{\omega_C}{G_{CH} G_{VT,i}} r_{R,W}$$

An dieser Stelle sei wiederholt, dass unter einem Gang ein diskretes Übersetzungsverhältnis des Getriebes verstanden wird. r_R_W entspricht in Gleichung G1 dabei einem Radius des Hinterrads, dessen Achse mit dem Getriebe gekoppelt ist. G_CH entspricht einem konstanten Kettenübersetzungsverhältnis und G_VT_i entspricht einem entsprechenden Übersetzungsverhältnis eines bestimmten Ganges i des Getriebes des Elektrofahrrads.

Anhand der oben stehenden Gleichung lässt sich das in Figur 3 gezeigte Diagramm ableiten, in welchem eine Fahrzeuggeschwindigkeit v_PED gegenüber der Trittfrequenz ω_C des Fahrradfahrers aufgetragen ist. Zusätzlich sind entsprechende Ganggeraden für vier Gänge G_VT_1 bis G_VT_4 dargestellt. Die Ganggeraden haben einen gemeinsamen Startpunkt im Ursprung des Diagramms. Anhand dieses Diagramms lässt sich somit ein direkter Zusammenhang zwischen der der Trittfrequenz ω_C und dem entsprechenden eingelegten Gang G_VT_i des Getriebes feststellen. An dieser Stelle sei darauf hingewiesen, dass für eine bestimmte Geschwindigkeit v_PED, eine bestimmte Trittfrequenz ω_C in Abhängigkeit eines Gangs G_VT_i nur Punkte auf den Ganggeraden liegen können und nicht außerhalb dieser.

Schließlich wird für das Verfahren V ein vorbestimmtes Trittfrequenzintervall Δω_PREF vorausgesetzt. Dieses Trittfrequenzintervall ΔW_PREF kann beispielsweise werkseitig vorgegeben sein oder aber von einem Benutzer des Elektrofahrrads vor oder während des Verfahrens V festgelegt werden. Dies kann beispielsweise wie in Figur 4 dargestellt mittels eines Keyboards KB geschehen. Alternativ kann das Trittfrequenzintervall Δω_PREF auch mittels eines Touchscreens oder einer anderweitigen Eingabemöglichkeit des Elektrofahrrads festgelegt werden. Das vorbestimmte Trittfrequenzintervall Δω_PREF ist beispielsweise 60 bis 80 Umdrehungen pro Minute (englisch: rounds per minute, kurz: rpm). Das vorbestimmte Trittfrequenzintervall Δω_PREF kann beispielsweise dasjenige Intervall sein, in welchem sich der Benutzer des Elektrofahrrads wohl fühlt und einen gewünschten Fahrkomfort erfährt. Das vorbestimmte Trittfrequenzintervall Δω_PREF wird durch einen maximalen und minimalen Frequenzwert festgelegt, wie nachfolgend in Gleichung G2 angegeben:

$$(\text{G2}): \qquad \Delta\omega_{PREF} = [\omega_{PREF,min}, \omega_{PREF,max}]$$

Setzt man nun dieses Trittfrequenzintervall Δω_PREF in die obenstehende Gleichung G1 ein, so erhält man, wie nachstehend in der Gleichung G3 angegeben, ein Geschwindigkeitsintervall Δv_PED_i in Abhängigkeit eines jeden Ganges G_VT_i:

$$(\text{G3}): \qquad \Delta v_{PED,i} = \frac{\Delta\omega_{PREF}}{G_{CH} G_{VT,i}} r_{R,W}$$

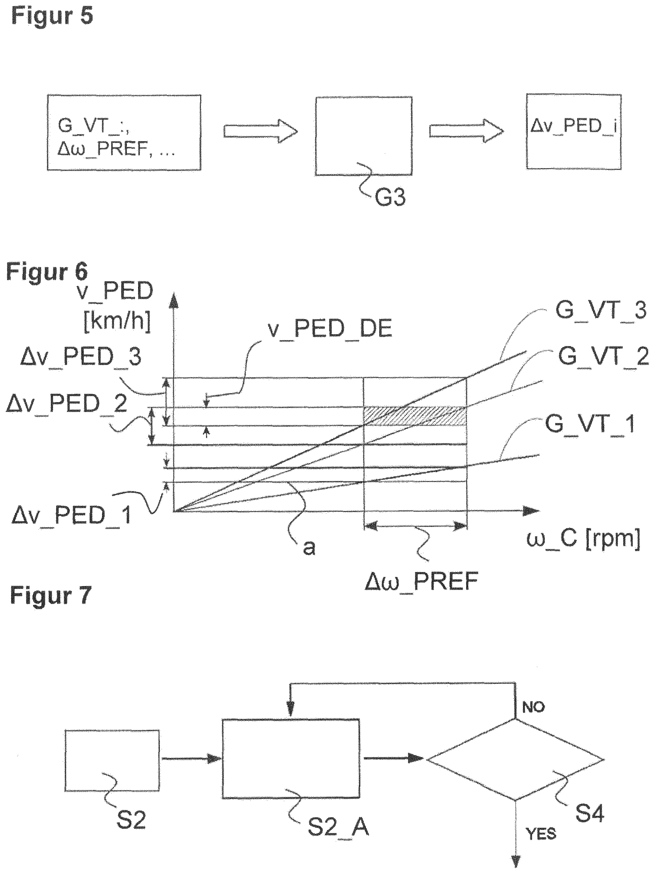

Dies ist auch in der schematischen Darstellung gemäß Figur 5 gezeigt.

Ausgehend von der Gleichung G3 und den so ermittelbaren Geschwindigkeitsintervallen ΔV_PED_i für jeden Gang G_VT_i erhält man die Diagrammdarstellung gemäß Figur 6, welche im Grunde genommen der Diagrammdarstellung aus Figur 3 entspricht, wobei zusätzlich mit vertikalen Linien das vorbestimmte Trittfrequenzintervall Δω_PREF dargestellt ist. Weiter sind aus Übersichtlichkeitsgründen nur drei Gänge GV_T_i bzw. Ganggeraden dargestellt. Mit Hilfe von horizontalen Linien sind für jeden Gang G_VT_1, G_VT_2 und G_VT_3 entsprechende Geschwindigkeitsintervalle Δv_PED_1, Δv_PED_2 und Δv_PED_3 angegeben.

Anhand von Figur 6 kann man feststellen, dass dem Gang G_VT_1 und der Projektion des bevorzugten Trittfrequenzintervalls Δω_PREF das Geschwindigkeitsintervall Δv_PED_1 entspricht. Folglich entspricht einer Geschwindigkeit des Elektrofahrrads, welche sich in diesem Geschwindigkeitsintervall Δv_PED_1 befindet, ausschließlich der Gang G_VT_1. Entsprechendes gilt für die Gänge G_VT_2 und G_VT_3, denen die korrespondierenden Geschwindigkeitsintervalle Δv_PED_2 und Δv_PED_3 entsprechen. Dabei erkennt man anhand der Figur 6, dass die beiden letzteren Geschwindigkeitsintervalle Δv_PED_2 und Δv_PED_3 überlappen. Dieses überlappende Geschwindigkeitsintervall ist mit dem Bezugszeichen v_PED_DE referenziert und in der Figur 6 schraffiert dargestellt. Wird also ein Geschwindigkeitswert ermittelt, welcher in diesem überlappenden Intervall v_PED_DE liegt, gibt es zwei Möglichkeiten einer entsprechenden Gangwahl, bei welcher die momentane Trittfrequenz Δω_C des Fahrers innerhalb des bevorzugten Trittfrequenzintervalls Δω_PREF liegt.

Die ermittelten Intervalle und die entsprechenden Gänge G_VT_i bzw. Übersetzungsverhältnisse sind ebenfalls im Permanentspeicher des Mikrocontrollers gespeichert und werden bei Aufruf des Verfahrens V in den Arbeitsspeicher des Mikrocontrollers geladen, beispielsweise bei einem Start der elektrischen Antriebseinheit des Elektrofahrrads.

Im Folgenden wird nun mit Hilfe des in Figur 1 dargestellten Ablaufdiagramms des Verfahrens V die Ermittlung eines optimalen Ganges G_VT_i für das Elektrofahrrad beschrieben.

In einem Schritt S0 wird das Verfahren V gestartet und es werden gegebenenfalls Variablen initialisiert. Der Start des Verfahrens V erfolgt beispielsweise zeitnah mit einem Start der elektrischen Antriebseinheit des Elektrofahrrads.

In einem Schritt S2 wird eine momentane Trittfrequenz ω_C ermittelt. Dafür werden ein oder mehrere Sensoren des Elektrofahrrads verwendet.

In einem weiteren Schritt S4 wird geprüft, ob die ermittelte momentane Trittfrequenz ω_C innerhalb des vorbestimmten Trittfrequenzintervalls Δω_PREF liegt.

Damit das Verfahren V funktioniert, muss die momentane Trittfrequenz ω_C innerhalb des vorbestimmten Trittfrequenzintervalls Δω_PREF liegen. Zudem sollte die momentane Geschwindigkeit des Elektrofahrrads v_PED_o eine Minimalgeschwindigkeit überschreiten.

Solange die Trittfrequenz ω_C außerhalb des bevorzugten Trittfrequenzintervalls Δω_PREF liegt, kann ein einfacher Algorithmus für das Ermitteln eines korrekten Ganges G_VT_i angewandt werden. Dieser kann beispielsweise auf einfachen Wenn-Dann-Regeln basieren. Zusätzlich können hierfür Geschwindigkeits- und/oder Trittfrequenzmessungen verwendet werden. Dabei sollten die Gänge so geschalten werden, dass die momentane Trittfrequenz ω_C innerhalb des vorbestimmten Trittfrequenzintervalls Δω_PREF fällt. Dabei wird vorausgesetzt, dass die Geschwindigkeit durch den Fahrer selbst erhöht wird und innerhalb entsprechender Grenzen liegt, so dass die momentane Trittfrequenz ω_C innerhalb des vorbestimmten Trittfrequenzintervalls Δω_PREF fallen kann. Dabei ist der geringste Fahrgeschwindigkeitswert V_PED, für welchen das Verfahren V anwendbar ist, der Schnittpunkt der geringsten Trittfrequenz des vorbestimmten Trittfrequenzintervalls Δω_PREF mit der Ganggeraden des Ganges G_VT_1 (s. Figur 6). Dies ist mit der Geraden a referenziert.

Die Schritte S2 und S4 sind nochmals detailliert in Figur 7 dargestellt. In Schritt S2 wird die momentane Trittfrequenz ω_C ermittelt, wobei in einem Zwischenschritt S2_A aufgrund eines einfachen Schaltungsalgorithmus, wie oben beschrieben, ein entsprechender Gang G_VT_i ermittelt wird. Anschließend wird im Schritt S4 geprüft, ob die momentane Trittfrequenz ω_C innerhalb des vorbestimmten Trittfrequenzintervalls Δω_PREF liegt. Liegt diese nicht in dem vorbestimmten Trittfrequenzintervall Δω_PREF so wird der Schritt S2_A wiederholt. Im Folgenden wird davon ausgegangen, dass nach dem Schritt S4 eine Trittfrequenz Δω_C vorliegt, welche innerhalb des vorbestimmten Trittfrequenzintervalls Δω_PREF liegt.

Anschließend wird in einem nächsten Schritt S6 die momentane Fahrgeschwindigkeit v_PED_o des Elektrofahrrads in Abhängigkeit der momentanen Trittfrequenz ω_C ermittelt.

Die momentane Fahrgeschwindigkeit v_PED_o wird beispielsweise mittels einem oder mehreren Sensoren, beispielsweise Drehmomenten oder Drehzahlsensoren ermittelt. Angenommen, ein Sensor ermittelt einen Geschwindigkeitswert der größer ist als der geringstmögliche, wie oben beschrieben, so liegt dieser innerhalb des Intervalls Δv_PED_1. Dadurch ergibt sich als einzige Schaltungsmöglichkeit beziehungsweise Auswahlmöglichkeit eines Ganges der Gang G_VT_1, damit die Trittfrequenz des Fahrers nach einem möglichen Schaltungsvorgang weiterhin in dem vorbestimmten Trittfrequenzintervall Δω_PREF liegt.

Dieser Fall ist allerdings nicht Gegenstand des beschriebenen Verfahrens V und wird nicht weiter betrachtet.

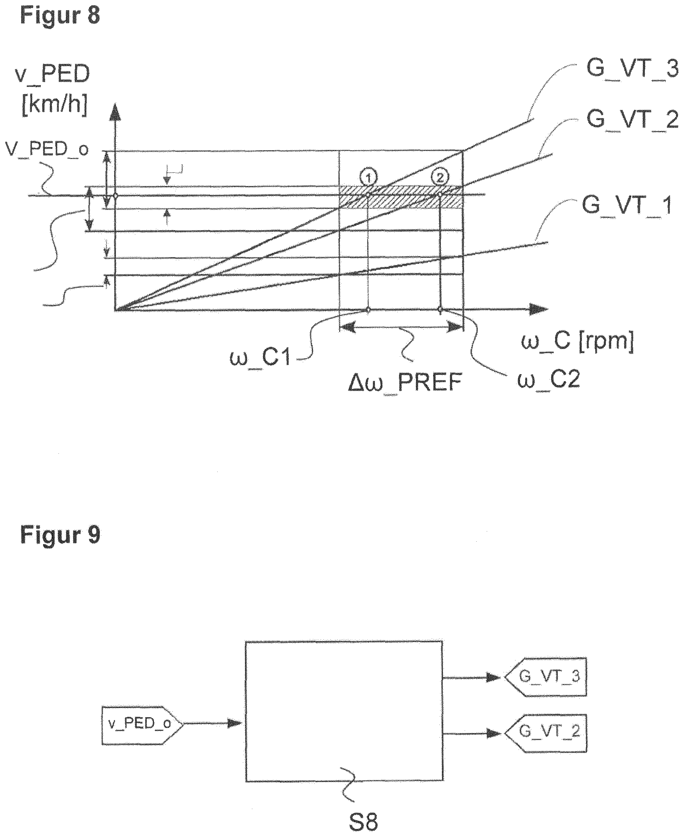

Wenn der momentane Geschwindigkeitswert V_PED_o innerhalb des überlappenden Intervalls v_PED_DE fällt, dann projizieren die Gänge G_VT_2 und G_VT_3 diesen Geschwindigkeitswert durch inverse Projektion in das vorbestimmte Trittfrequenzintervall Δω_PREF (s. auch Figur 8 mit den Bezugszeichen 1 und 2). Somit sind beide Gänge mögliche Kandidaten für den nächsten Schaltungsvorgang. Die Ermittlung der wenigstens zwei Gänge G_VT_2 und G_VT_3 findet im Schritt S8 des Verfahrens V statt und ist in Figur 9 nochmals übersichtlich dargestellt. Jedem der Gänge G_VT_2 und G_VT_3 ist eine entsprechende Trittfrequenz ω_C1 bzw. ω_C2 zugewiesen.

Abhängig von diesem Schritt S8 wird nun in den folgenden Schritten des Verfahrens V derjenige Gang G_VT_2 oder G_VT_3 ausgewählt, für welchen der Elektromotor weniger elektrische Energie verbraucht.

An dieser Stelle sei darauf hingewiesen, dass für die Mehrheit von Getrieben der Elektrofahrräder und vorbestimmten Trittfrequenzintervallen Δω_PREF das überlappende Geschwindigkeitsintervall v_PED_DE mehr als einen Gang beziehungsweise ein Gangverhältnis im Fahrmodus trifft, aufgrund der Ausgestaltung und Dimensionierung von diesen Getrieben. Üblich sind dabei wenigstens zwei oder drei Gänge beziehungsweise Gangverhältnisse. Dagegen ist es eher weniger häufig, dass nur ein Gang für eine bestimmte Geschwindigkeit in Abhängigkeit des vorbestimmten Trittfrequenzintervalls Δω_PREF ermittelt wird. Daher können für einen großen Prozentsatz der Zeit, in welcher das Elektrofahrrad betrieben wird, erhebliche Energieeinsparungen mittels des Verfahrens V erreicht werden.

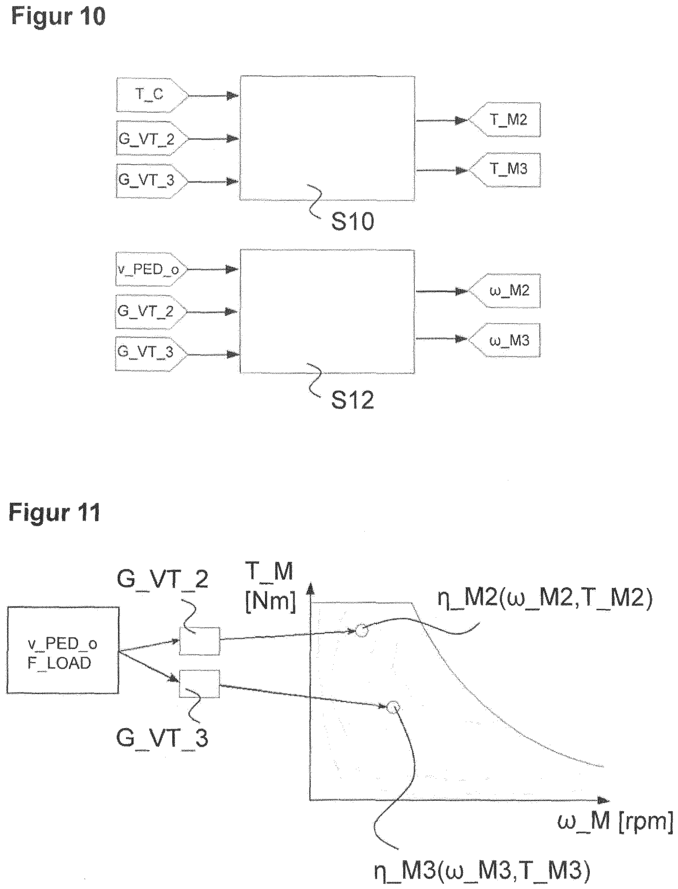

In einem nächsten Schritt S10 wird für jeden der ermittelten Gänge G_VT_2 und G_VT_3 ein Motordrehmoment T_M2 beziehungsweise T_M3 ermittelt. Zudem wird in einem Schritt S12 für jeden der beiden Gänge G_VT_2 und G_VT_3 eine Motorwinkelgeschwindigkeit ω_M2 und ω_M3 des Elektromotors ermittelt. Dies ist auch in einer Detaildarstellung in Figur 10 dargestellt.

Hierfür ist eine Drehmomentanalyse vorzunehmen, welche nachfolgend beschrieben wird. Während der Fahrradfahrer in die Pedale tritt und dabei eine Drehmomentunterstützung von dem Elektromotor erfährt, bewegt sich das Fahrrad mit der bestimmten momentanen Geschwindigkeit v_PED_o. Zusätzlich wirken beispielsweise ein Luftwiderstand auf das Fahrrad und den Fahrer und diese erfahren zudem beispielsweise eine Beschleunigung oder eine Verlangsamung aufgrund von Trägheitskräften. Zudem wirken auf das Elektrofahrrad und den Fahrradfahrer Reibungskräfte aufgrund eines Straßenprofils sowie Schwerkräfte ein. Damit das Fahrrad bei der bestimmten Geschwindigkeit v_PED_o fahren kann, müssen eine Lastkräfte F LOAD und Traktionskräfte F TR gleich sein, so dass sich die folgende Gleichung G4 ergibt:

$$(G4): \quad F_{LOAD} = F_{TR} = G_{VT}\frac{G_{CH}}{r_{R,W}}(T_C + \xi T_M \eta_{GB})\eta_{VT}\eta_{CH}$$

Dabei entspricht F_LOAD den Lastkräften, F_TR den Traktionskäften durch den Fahrradfahrer und der Drehmomentunterstützung am Pedal durch den Elektromotor, T_C dem Drehmoment des Fahrradfahrers am Pedalschaft, T_M dem Drehmoment des Elektromotors am Motorschaft, $\xi$ einem konstanten Übersetzungsverhältnis zwischen dem Elektromotor und dem Pedalschaft, $\eta$_GB einem Wirkungsgrad zwischen dem Elektromotor und dem Pedal, $\eta$_VT einem Wirkungsgrad zwischen dem Getriebe und dem Hinterrad sowie $\eta$_CH einem Wirkungsgrad der Kette.
Die Unterstützung des Fahrradfahrers durch den Elektromotor wird mit folgender Gleichung G5 beschrieben:

$$(G5): \quad \xi T_M \eta_{GB} = k_{ASSIST} T_C$$

Dabei entspricht K_ASSIST einem Assistenzfaktor, der prozentual angibt, wie viel Prozent des von dem Fahrradfahrer selbst aufgebrachten Drehmoments von dem Elektromotor als zusätzliches Drehmoment aufgebracht wird.
Durch Einsetzen der Gleichung G5 in die Gleichung G4 erhält man folgende Gleichung G6:

$$(G6): \quad F_{LOAD} = G_{VT,O}\frac{G_{CH}}{r_{R,W}}[T_C(1 + k_{ASSIST})]\eta_{VT}\eta_{CH}$$

Dabei entspricht G_VT_O dem momentanen, eingelegten Gang.
Angenommen das Elektrofahrrad befindet sich in einem normalen, im Wesentlichen konstanten Fahrmodus, in welchem keine abrupten Änderungen der Geschwindigkeit des Elektrofahrrads auftreten, dann bewirkt eine Änderung des Ganges eine Änderung des von dem Fahrradfahrer selbst aufgebrachten Drehmoments T_C. Dabei bleibt die Kraft F_LOAD gleich. Dies führt zu folgender Gleichung G7:

$$(G7): \quad F_{LOAD} = G_{VT,i}\frac{G_{CH}}{r_{R,W}}[T_{C,i}(1 + k_{ASSIST})]\eta_{VT}\eta_{CH}$$

G_VT_i und T_C_i entsprechen dabei dem neuen Gang bzw. dem von dem Fahrradfahrer aufzubringenden neuen Drehmoment, welches sich in Folge einer Gangschaltung verändert.
Aus den Gleichungen 6 und 7 kann man nun unter Verwendung der zuvor ermittelten zwei Gänge G_VT_2 und G_VT_3 für die momentane Geschwindigkeit v_PED_O folgende Gleichung G8 gewinnen:

$$(G8): \quad T_{C,i} = T_C \frac{G_{VT,O}}{G_{VT,i}}$$

Das Drehmoment T C wird dabei mittels eines Drehmomentsensors gemessen, ebenso ist der aktuelle Gang G_VT_O bekannt. Entweder der aktuelle Gang G_VT_O ist mittels eines Sensors gemessen oder indirekt über Geschwindigkeit über Trittfrequenzmessungen errechnet. G_VT_i ist bekannt nach Ausführen des Schrittes S8 des Verfahrens V. Mittels der Gleichung G5 erhält man die nachfolgende Gleichung G9:

$$(G9): \quad T_{M,i} = \frac{k_{ASSIST}T_{C,i}}{\xi \eta_{GB}}$$

Mit Gleichung G9 lässt sich somit das benötigte Motordrehmoment T_M_i für den entsprechenden ermittelten Gang G_VT_2 beziehungsweise G_VT_3 aus Schritt S8 ermitteln. Für die Gleichung G9 ist zusätzlich der Wirkungsgrad η_GB nötig. Dieser ist abhängig von Änderungen bezüglich der Benutzung des Fahrrads, der Schmierung und anderen Einflüssen, welche sich nicht ohne weiteres analytisch ermitteln lassen. Daher ist dieser Faktor ein Schätzwert. Jedoch beeinflusst dieser Schätzwert nicht die Auswahl des optimalen Ganges hinsichtlich eines Energieverbrauchs des Elektromotors, da der Wert dieses Faktors in den Gleichungen für jeden Gang verwendet wird. Zudem wird ein Energieverbrauchsvergleich angestellt, so dass Schätzwertfehler dieses Schätzwertes herausfallen.

Im Schritt S12 wird die Motorgeschwindigkeit für jeden ausgewählten Gang G_VT_2 und G_VT_3 in Abhängigkeit der aktuellen Geschwindigkeit V_PED_o des Elektrofahrrads ermittelt. Dabei wird auf Gleichung 1 wie eingangs erwähnt zurückgegriffen. Somit ergibt sich folgende Gleichung G10:

$$(\text{G10}): \qquad \omega_{M,i} = v_{PED,o} \frac{\xi G_{CH} G_{VT,i}}{r_{R,W}}$$

Somit erhält man nach Ausführen der Schritte S10 und S12 eine volle Beschreibung der Betriebspunkte des Elektromotors der zwei ermittelten Gänge G_VT_2 und G_VT_3. Als Betriebspunkt wird die Motordrehzahl ω_M2 und das dazugehörige Motordrehmoment T_M2 beziehungsweise ω_M3 und T_M3 verstanden. Dies ist schematisch in Figur 11 dargestellt, wobei Figur 11 auch zeigt, dass anhand der ermittelten Gänge G_VT_2 und G_VT_3 Wirkungsgrade η_M2 beziehungsweise η_M3 des Elektromotors ermittelt werden. Die Wirkungsgrade η_M2 beziehungsweise η_M3 werden in einem weiteren Schritt S14 ermittelt.

Hierfür wird das eingangs erwähnte Verbrauchskennfeld VK des Elektromotors verwendet, wobei durch entsprechende Interpolation entsprechende Wirkungsgrade η_Mi ermittelt werden.

Schließlich wird in einem Schritt S16 mit Hilfe der Wirkungsgrade η_M2 und η_M3, den Drehmomenten T M2 bzw. T M3 und Motorwinkelgeschwindigkeiten ω_M2 bzw. ω_M3 eine Leistung P_M_i für jeden der beiden ermittelten Gänge G_VT_2 beziehungsweise G_VT_3 ermittelt. Im Ausführungsbeispiel werden somit die Leistungen P_M2 und P_M3 ermittelt, wie nachfolgende Gleichung G11 zeigt:

$$(\text{G11}): \qquad P_{M,i} = \eta_{M,i} T_{M,i} \omega_{M,i}$$

Dabei entsprechen dem Suffix "i" wiederum der jeweilige Gang G_VT_i.

In einem weiteren Schritt S18 werden die ermittelten Leistungen P_M2 und P_M3 miteinander verglichen, wobei diejenige Leistung ermittelt wird, welche den geringsten Wert aufweist. Anschließend wird in einem Schritt S20 derjenige Gang G_VT_2 oder G_VT_3 ermittelt, für welchen die geringste Leistung P_M2 oder P_M3 ermittelt wurde.

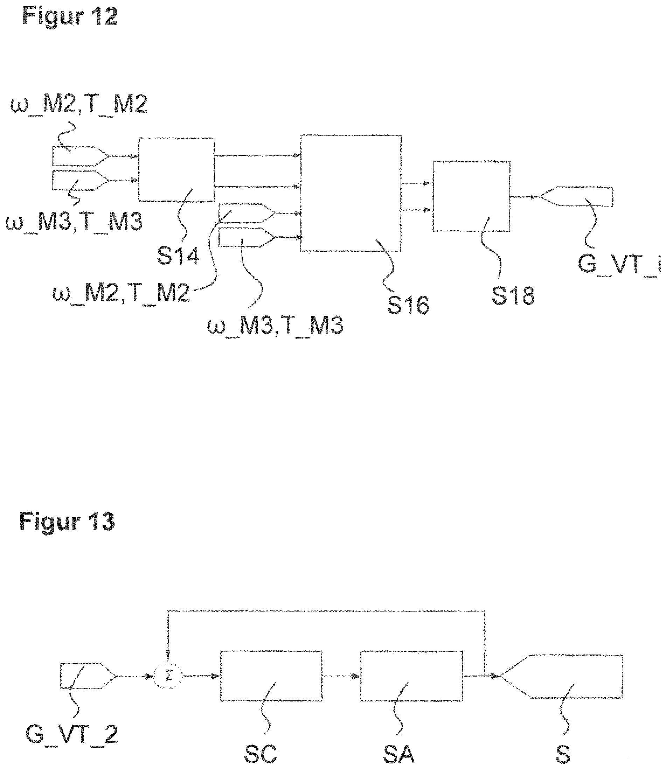

Dies ist auch anhand von Figur 12 schematisch dargestellt.

Das Verfahren V kann des Weiteren einen optionalen Schritt aufweisen, welcher das Ausgeben eines Signals umfasst, wobei das Signal Informationen über den ermittelten Gang enthält, für den die geringere Leistung ermittelt wurde. Beispielsweise kann das Ausgeben des Signals ein Ausgeben eines Audiosignals, eines Videosignals und/oder eines Steuersignals für eine Anzeigevorrichtung umfassen. So ist es möglich, dass einem Fahrradfahrer der optimale, energiesparsamste Gang angezeigt wird, in welchen dieser schalten soll. Das Schalten wird dabei allerdings dem Fahrradfahrer selbst überlassen.

Alternativ kann nach dem Schritt S20 auch ein anderer optionaler Schritt erfolgen, in welchen in Abhängigkeit des ermittelten Ganges G_VT_2 beziehungsweise G_VT_3 ein Aktuator (SA) zum automatischen Schalten des Getriebes des Elektrofahrrads angesteuert wird. Somit kann das Elektrofahrrad automatisch Getriebeschaltungen vornehmen und somit immer unabhängig von einem Benutzer des Elektrofahrrads den energiesparsamsten Gang in der vorbestimmten Trittfrequenz Δω_PREF ermitteln.

Dies ist in Figur 13 beispielhaft dargestellt. Dabei wird angenommen, dass der Gang G_VT_2 ermittelt wurde. Dieser Gang G_VT_2 wird einem Schaltungscontroller SC signaltechnisch übermittelt. Dieser wiederum steuert den Aktuator (SA) an, welcher die Schaltung S durchführt.

Zusätzlich kann das Ausgeben des Signals wie oben beschrieben beziehungsweise das Ansteuern des Aktuators (SA) zum automatischen Schalten nach einer vorgegebenen Zeitspanne nach Ermittlung desjenigen Gangs mit der geringsten Leistung ausgeführt werden. Eine derartige Zeitspanne kann beispielsweise sinnvoll sein, wenn häufiges Hin- und Herschalten vermieden werden soll oder aber erst überprüft werden soll, ob Schwankungen in der Fahrgeschwindigkeit auftreten.

In einem weiteren optionalen Schritt kann nach Ermitteln der Motordrehmomente T_M_i und Motorwinkelgeschwindigkeiten ω_M_i eine Klassifizierung der ermittelten Motordrehmomente T_M_i und der ermittelten Motorwinkelgeschwindigkeiten ω_M_i durchgeführt werden wie eingangs beschrieben. Dies kann beispielsweise dazu dienen, Sicherheitskontrollen durchzuführen, bei welchen überprüft wird, ob der Elektromotor innerhalb vorgegebener Systemgrenzen betrieben wird. Beispielsweise kann so festgestellt werden, dass ein errechnetes Motordrehmoment nicht von dem Elektromotor aufgebracht werden kann.

Das Verfahren V ist somit als intelligentes und energieoptimiertes Verfahren ausgebildet, welches beide eingangs erwähnten Anforderungen berücksichtigt: Einen Fahrkomfort des Fahrers und einen optimalen Energieverbrauch aufgrund eines niedrigen Energieverbrauchs während der Benutzung des Elektrofahrrads.

Bezugszeichenliste

| | |
|---|---|
| F_LOAD | Lastkraft |
| F_TR | Traktionskraft |
| G_CH | Kettenübersetzungsverhältnis |
| G_VT_i, G_VT_1, G_VT_2 | Gang |
| G_VT_3, G_VT_4, G_VT_o | |
| k_ASSIST | Assitenzfaktor |
| KB | Keyboard |
| P_M_i, P_M2, PM3 | Leistung des Elektromotors |
| S0 bis S20 | Schritte |
| S | Schaltung |
| SA | Aktuator |
| SC | Schaltungscontroller |
| T_M_i, T_M2, T_M3 | Motordrehmoment |
| V | Verfahren |
| v_PED, v_PED_o | Geschwindigkeit |
| v_PED_DE | überlappendes Geschwindigkeitsinter-vall |
| Δv_PED_i, Δv_PED_1, | Geschwindigkeitsintervall |
| Δv_PED_2, Δv_PED_3 | |
| VK | Verbrauchskennfeld |
| WK | Wirkungsgradkonturen |
| η_GB, η_CH, η_VT | Wirkungsgrade |
| η_Mi, η_M2, η_M3 | Wirkungsgrad des Elektromotors |
| ω_C, ω_C1, ω_C2 | Trittfrequenz |
| ω_M_i, ω_M2, ω_M3 | Motorwinkelgeschwindigkeit |
| ω_PREF | vorbestimmtes Trittfrequenzintervall |

**Patentansprüche**

1.  Verfahren (V) zum Betreiben eines Elektrofahrrads, welches einen Elektromotor und ein Getriebe mit mindestens zwei Gängen (G_VT_i) aufweist, umfassend:

    - Ermitteln einer momentanen Trittfrequenz (ω_C), welche von einem Benutzer des Elektrofahrrads erzeugt wird;
    - Prüfen, ob die ermittelte momentane Trittfrequenz (ω_C) innerhalb eines vorbestimmten Trittfrequenzintervalls (Δω PREF) liegt;
    - Ermitteln einer momentanen Fahrgeschwindigkeit (v_PED_o) des Elektrofahrrads;
    - Ermitteln wenigstens zweier Gänge (G_VT_2, G_VT_3) des Getriebes innerhalb des vorbestimmten Trittfrequenzintervalls (ω_PREF) in Abhängigkeit der ermittelten Fahrgeschwindigkeit (V_PED_O);
    - Ermitteln jeweils einer Leistung (P_M2, P_M3) des Elektromotors für jeden der ermittelten wenigstens zwei Gänge (G_VT_2, G_VT_3); und **gekennzeichnet durch**
    - Ermitteln der geringsten ermittelten Leistung (P_M2, P_M3) des Elektromotors durch Vergleichen der wenigstens beiden ermittelten Leistungen (P_M2, P_M3) des Elektromotors; und
    - Ermitteln desjenigen Gangs (G_VT_2, G_VT_3) des Getriebes, für den die geringere Leistung (P_M2, P_M3) ermittelt wurde.

2.  Verfahren (V) nach Anspruch 1, umfassend:

- Ermitteln jeweils eines Motordrehmoments (T_M2, T_M3) des Elektromotors für jeden der ermittelten wenigstens zwei Gänge (G_VT_2, G_VT_3);
- Ermitteln jeweils einer Motorwinkelgeschwindigkeit ($\omega$_M2, $\omega$_M3) des Elektromotors für jedes der ermittelten wenigstens zwei Gänge (G_VT_2, G_VT_3); und
- Ermitteln der Leistungen (P_M2, P_M3) des Elektromotors in Abhängigkeit der entsprechenden ermittelten Motordrehmomente (T_M2, T_M3) und in Abhängigkeit der entsprechenden ermittelten Motorwinkelgeschwindigkeiten ($\omega$_M2, $\omega$_M3).

3. Verfahren (V) nach Anspruch 2, umfassend:

- Ermitteln jeweils eines Wirkungsgrades ($\eta$_M2, $\eta$_M3) des Elektromotors für jeden der ermittelten zwei Gänge (G_VT_2, G_VT_3) in Abhängigkeit des entsprechenden ermittelten Motordrehmoments (T_M2, T_M3) und in Abhängigkeit der entsprechenden ermittelten Motorwinkelgeschwindigkeit ($\omega$_M2, $\omega$_M3); und
- Ermitteln der Leistungen (P_M2, P_M3) des Elektromotors in Abhängigkeit der Wirkungsgrade ($\eta$_M2, $\eta$_M3), in Abhängigkeit der entsprechenden ermittelten Motordrehmomente (T_M2, T_M3) und in Abhängigkeit der entsprechenden ermittelten Motorwinkelgeschwindigkeiten ($\omega$_M2, $\omega$_M3).

4. Verfahren (V) nach Anspruch 3, wobei die Wirkungsgrade ($\eta$_M2, $\eta$_M3) anhand eines Verbrauchskennfelds (VK) des Elektromotors ermittelt werden.

5. Verfahren (V) nach Anspruch 2, wobei nach Ermitteln der Motordrehmomente (T_M2, T_M3) und Motorwinkelgeschwindigkeiten ($\omega$_M2, $\omega$_M3) eine Klassifizierung der ermittelten Motordrehmomente (T_M2, T_M3) und der ermitteltem Motorwinkelgeschwindigkeiten ($\omega$_M2, $\omega$_M3) durchgeführt wird.

6. Verfahren (V) nach einem der vorhergehenden Ansprüche, welches ein Ausgeben eines Signals umfasst, wobei das Signal Informationen über den ermittelten Gang (G_VT_2, G_VT_3) enthält, für den die geringere Leistung (P_M2, P_M3) ermittelt wurde.

7. Verfahren (V) nach Anspruch 6, wobei das Ausgeben des Signals das Ausgeben eines Audiosignals, eines Videosignals und/oder eines Steuersignals für eine Anzeigevorrichtung umfasst.

8. Verfahren (V) nach einem der Ansprüche 1 bis 5, wobei in Abhängigkeit des ermittelten Gangs (G_VT_2, G_VT_3), welcher der geringsten ermittelten Leistung (P_M2, P_M3) zugeordnet ist, ein Aktuator (SA) zum automatischen Schalten des Getriebes angesteuert wird.

9. Verfahren (V) nach Anspruch 8, wobei der Aktuator (SA) zum automatischen Schalten des Getriebes erst nach einer vorgegebenen Zeitspanne nach Ermittlung desjenigen Gangs (G_VT_2, G_VT_3) des Getriebes angesteuert wird, für den die geringere Leistung (P_M2, P_M3) ermittelt wurde.

10. Vorrichtung zum Betreiben eines Elektrofahrrads, die dazu ausgebildet ist, ein Verfahren (V) nach den Ansprüchen 1 bis 9 durchzuführen.

**Claims**

1. Method (V) for operating an electric bicycle having an electric motor and a transmission having at least two gears (G_VT_i), comprising:

- ascertaining an instantaneous pedal frequency ($\omega$_C), which is generated by a user of the electric bicycle;
- checking whether the ascertained instantaneous pedal frequency ($\omega$_C) lies within a predetermined pedal frequency interval ($\Delta\omega$PREF);
- ascertaining an instantaneous travel speed (v_PED_o) of the electric bicycle;
- ascertaining at least two gears (G_VT_2, G_VT_3) of the transmission within the predetermined pedal frequency interval ($\omega$_PREF) depending on the ascertained travel speed (V_PED_O);
- ascertaining a respective power (P M2, P M3) of the electric motor for each of the at least two gears (G_VT_2, G_VT_3) ascertained;

and **characterized by**

- ascertaining the lowest ascertained power (P_M2, P M3) of the electric motor by comparing the at least two ascertained powers (P_M2, P_M3) of the electric motor; and
- ascertaining that gear (G_VT_2, G_VT_3) of the transmission for which the lower power (P M2, P_M3) was ascertained.

2. Method (V) according to Claim 1, comprising:

- ascertaining a respective motor torque (T_M2, T_M3) of the electric motor for each of the at least two gears (G_VT_2, G_VT_3) ascertained;
- ascertaining a respective motor angular velocity ($\omega$_M2, ($\omega$_M3) of the electric motor for each of the at least two gears (G_VT_2, G_VT_3) ascertained; and
- ascertaining the powers (P_M2, P_M3) of the electric motor depending on the corresponding ascertained motor torques (T_M2, T_M3) and depending on the corresponding ascertained motor angular velocities ($\omega$_M2, ($\omega$_M3).

3. Method (V) according to Claim 2, comprising:

- ascertaining a respective efficiency ($\eta$_M2, $\eta$_M3) of the electric motor for each of the ascertained two gears (G_VT_2, G_VT_3) depending on the corresponding ascertained motor torque (T_M2, T_M3) and depending on the corresponding ascertained motor angular velocity ($\omega$_M2, $\omega$_M3); and
- determining the powers (P_M2, P M3) of the electric motor depending on the efficiencies ($\eta$_M2, $\eta$_M3), depending on the corresponding ascertained motor torques (T_M2, T_M3) and depending on the corresponding ascertained motor angular velocities ($\omega$_M2, $\omega$_M3).

4. Method (V) according to Claim 3, wherein the efficiencies ($\eta$_M2, $\eta$_M3) are ascertained on the basis of a consumption characteristic map (VK) of the electric motor.

5. Method (V) according to Claim 2, wherein, after ascertaining the motor torques (T_M2, T_M3) and motor angular velocities ($\omega$_M2, $\omega$_M3), a classification of the ascertained motor torques (T_M2, T_M3) and of the ascertained motor angular velocities ($\omega$_M2, $\omega$_M3) is carried out.

6. Method (V) according to any of the preceding claims, which comprises outputting a signal, wherein the signal contains information about the ascertained gear (G_VT_2, G_VT_3) for which the lower power (P_M2, P_M3) was ascertained.

7. Method (V) according to Claim 6, wherein outputting the signal comprises outputting an audio signal, a video signal and/or a control signal for a display device.

8. Method (V) according to any of Claims 1 to 5, wherein an actuator (SA) for automatically shifting the transmission is driven depending on the ascertained gear (G_VT_2, G_VT_3) which is assigned to the lowest ascertained power (P_M2, P_M3).

9. Method (V) according to Claim 8, wherein the actuator (SA) for automatically shifting the transmission is driven only after a predefined time period after ascertaining that gear (G_VT_2, G_VT_3) of the transmission for which the lower power (P_M2, P_M3) was ascertained.

10. Device for operating an electric bicycle, said device being designed to carry out a method (V) according to Claims 1 to 9.

**Revendications**

1. Procédé (V) pour faire fonctionner un vélo à assistance électrique comprenant un moteur électrique et une transmission ayant au moins deux vitesses (G_VT_i), consistant à :

- déterminer une fréquence de pédalage actuelle ($\omega$_C) générée par un utilisateur du vélo à assistance électrique ;
- vérifier si la fréquence de pédalage actuelle déterminée ($\omega$_C) se situe à l'intérieur d'un intervalle de fréquence de pédalage prédéterminé ($\Delta\omega$_REF) ;

- déterminer une vitesse de déplacement actuelle (v_PED_o) du vélo à assistance électrique ;
- déterminer au moins deux rapports (G_VT_2, G_VT_3) de la transmission dans l'intervalle de fréquence de pédalage prédéterminé (ω_PREF) en fonction de la vitesse de déplacement déterminée (V_PED_O) ;
- déterminer une puissance respective (P_M2, P_M3) du moteur électrique pour chacun des au moins deux rapports déterminés (G_VT_2, G_VT_3) ;

et **caractérisé par** le fait de

- déterminer la plus faible puissance déterminée (P_M2, P_M3) du moteur électrique en comparant les au moins deux puissances déterminées (P_M2, P_M3) du moteur électrique ; et
- déterminer le rapport (G_VT_2, G_VT_3) de la transmission pour lequel la puissance la plus faible (P_M2, P_M3) a été déterminée.

2. Procédé (V) selon la revendication 1, consistant à :

- déterminer un couple moteur respectif (T_M2, T_M3) du moteur électrique pour chacun des au moins deux rapports déterminés (G_VT_2, G_VT_3) ;
- déterminer une vitesse angulaire de moteur respective (ω_M2, ω_M3) du moteur électrique pour chacun des au moins deux rapports déterminés (G_VT_2, G_VT_3) ; et
- déterminer les puissances (P_M2, P_M3) du moteur électrique en fonction des couples moteur déterminés correspondants (T_M2, T M3) et en fonction des vitesses angulaires de moteur déterminées correspondantes (ω_M2, ω_M3).

3. Procédé (V) selon la revendication 2, consistant à :

- déterminer un rendement respectif (η_M2, η_M3) du moteur électrique pour chacun des deux rapports déterminés (G_VT_2, G_VT_3) en fonction du couple moteur déterminé correspondant (T_M2, T_M3) et en fonction de la vitesse angulaire de moteur déterminée correspondante (ω_M2, ω_M3) ; et
- déterminer les puissances (P_M2, P_M3) du moteur électrique en fonction du rendement (η_M2, η_M3), en fonction des couples moteur déterminés correspondants (T_M2, T_M3) et en fonction des vitesses angulaires de moteur déterminées correspondantes (ω_M2, ω_M3).

4. Procédé (V) selon la revendication 3, dans lequel le rendement (η_M2, η_M3) est déterminé à partir d'un diagramme caractéristique de consommation (VK) du moteur électrique.

5. Procédé (V) selon la revendication 2, dans lequel, après avoir déterminé les couples moteur (T_M2, T_M3) et les vitesses angulaires de moteur (ω_M2, ω_M3), une classification des couples moteur déterminés (T_M2, T_M3) et des vitesses angulaires de moteur déterminées (ω_M2, ω_M3) est effectuée.

6. Procédé (V) selon l'une des revendications précédentes, consistant à fournir en sortie un signal, dans lequel le signal contient des informations concernant le rapport déterminé (G_VT_2, G_VT_3) pour lequel la puissance la plus faible (P_M2, P_M3) a été déterminée.

7. Procédé (V) selon la revendication 6, dans lequel la fourniture en sortie du signal consiste à fournir en sortie un signal audio, un signal vidéo et/ou un signal de commande destiné à un dispositif d'affichage.

8. Procédé (V) selon l'une des revendications 1 à 5, dans lequel un actionneur (SA) destiné au changement automatique de vitesse est commandé en fonction du rapport déterminé (G_VT_2, G_VT_3), qui est associé à la puissance déterminée la plus faible (P_M2, P_M3).

9. Procédé (V) selon la revendication 8, dans lequel l'actionneur (SA) destiné au changement automatique de vitesse de la transmission n'est actionné qu'après une période de temps prédéterminée, après détermination du rapport (G_VT_2, G_VT_3) de la transmission pour lequel la puissance la plus faible (P_M2, P_M3) a été déterminée.

10. Dispositif pour faire fonctionner un vélo à assistance électrique conçu pour mettre en oeuvre un procédé (V) selon les revendications 1 à 9.

**Figur 1**

**Figur 2**

**Figur 3**

**Figur 4**

## Figur 5

| G_VT_:, Δω_PREF, ... | ⟹ | (G3) | ⟹ | Δv_PED_i |

## Figur 6

v_PED [km/h]

Δv_PED_3

Δv_PED_2

Δv_PED_1

v_PED_DE

G_VT_3

G_VT_2

G_VT_1

a

Δω_PREF

ω_C [rpm]

## Figur 7

S2 → S2_A → S4

NO

YES

## Figur 8

## Figur 9

## Figur 10

## Figur 11

**Figur 12**

ω_M2,T_M2

ω_M3,T_M3

S14

ω_M2,T_M2

ω_M3,T_M3

S16

S18

G_VT_i

**Figur 13**

G_VT_2

Σ

SC

SA

S

**EP 3 094 548 B1**

**IN DER BESCHREIBUNG AUFGEFÜHRTE DOKUMENTE**

**In der Beschreibung aufgeführte Patentdokumente**

- JP H10250674 B